# EUROPÄISCHE PATENTSCHRIFT

(11) **EP 1 173 686 B1**
(45) Veröffentlichungstag und Bekanntmachung des Hinweises auf die Patenterteilung: **18.06.2003**
(21) Anmeldenummer: 00920656.6
(22) Anmeldetag: 04.04.2000
(51) Int. Cl.: F16D 48/06

(54) **VERFAHREN ZUR DURCHFÜHRUNG EINER AUTOMATISIERTEN KUPPLUNGSBETÄTIGUNG WÄHREND ANTRIEBSLOSEN FAHRBETRIEBSPHASEN**
METHOD FOR CARRYING OUT AN AUTOMATED CLUTCH ACTUATION DURING NON-DRIVEN DRIVING OPERATIONAL PHASES
PROCEDE POUR ACTIONNER DE MANIERE AUTOMATISEE UN EMBRAYAGE PENDANT DES PHASES DE FONCTIONNEMENT SANS FORCE MOTRICE

(30) Priorität: 03.05.1999 DE 19920065
(43) Veröffentlichungstag der Anmeldung: 23.01.2002
(73) Patentinhaber: DaimlerChrysler AG, 70567 Stuttgart (DE)
(72) Erfinder: ECKSTEIN, Fredy, verstorben (DE); GIMMLER, Helmut, D-71409 Schwaikheim (DE); KUHN, Klaus-Peter, D-73655 Plüderhausen (DE); ONNEN, Christian, D-73730 Esslingen (DE); SCHERER, Friedrich, D-72669 Unterensingen (DE); SCHWARZ, Alexander, D-70619 Stuttgart (DE); WEISS, Michael, D-71522 Backnang (DE); WOLLENHAUPT, Udo, D-71394 Kernen (DE)
(86) Internationale Anmeldenummer: EP0002970
(87) Internationale Veröffentlichungsnummer: WO00066905

(56) Entgegenhaltungen:
- EP-A- 0 529 346
- EP-A- 0 860 624
- WO-A-00/06410
- DE-A- 3 127 425
- DE-A- 3 204 002
- DE-A- 3 430 983
- DE-A- 3 822 316
- DE-A- 4 302 500
- DE-A- 4 334 210
- DE-A- 4 419 633
- DE-A- 19 653 935
- DE-A- 19 827 117
- DE-A- 19 829 861
- DE-A- 19 838 169
- GB-A- 2 279 123
- US-A- 4 842 113
- US-A- 5 349 267

## Beschreibung

Die Erfindung betrifft es Verfahren zur Durchführung einer automatisierten Kupplungsbetätigung nach dem Oberbegriff von Patentanspruch 1.

Aus der DE 34 30 983 A1 ist bereits ein Verfahren zur Durchführung einer automatisierten Kupplungsbetätigung eines Kraftfahrzeuges mit einem Antriebsmotor und einem mit diesem über eine Kupplung verbundenen Getriebe, bekannt. Bei diesem Verfahren weist die Kupplung sowohl eine geöffnete als auch eine geschlossene Betriebsstellung auf, in welche diese Kupplung automatisiert überführbar ist. Die Kupplung ist in Abhängigkeit von Fahrzuständen bzw. fahrdynamischen Meßwerten und Motorstellgrößen in die göffnete bzw. geschlossene Betriebsstellung überführbar. Dazu sind Meßwertaufnehmer und elektronische Schaltkreise vorgesehen. Durch ein automatisieres Öffnen der Kupplung im Schubbetrieb läßt sich somit Kraftstoff sparen.

Ferner zeigt die DE 197 00 325 A1 ein Verfahren zum Betreiben einer Antriebsanordnung eines Kraftfahrzeuges. Die Antriebsanordnung umfaßt einen Antriebsmotor, ein Getriebe, eine Kupplung und eine Steuerungseinrichtung. Die Kupplung ist im Kraftfluß zwischen dem Antriebsmotor und dem Getriebe angeordnet und ist mittels der Steuerungseinrichtung ein- und ausrückbar.
Nach Vorgabe der Fahrgeschwindigkeit (beispielsweise durch das Fahrpedal) wird von der Steuerungseinrichtung mittels des Leistungsstellgliedes (Drosselklappe oder Einspritzpumpe) die Fahrgeschwindigkeit eingestellt. Bleibt diese Fahrgeschwindigkeit über einen bestimmten Zeitraum konstant, wird die Kupplung zur Kraftstoffersparnis geöffnet und der Antriebsmotor auf Leerlaufdrehzahl zurückgeregelt. Fällt nun nach dieser Fahrbetriebsphase mit geöffneter Kupplung die Fahrgeschwindigkeit unter einen bestimmten fahrgeschwindigkeitsabhängigen Schwellwert, so wird die Kupplung wieder geschlossen.

Aus der DE 42 13 589 A1 ist es bei einem Verfahren zur Durchführung einer automatisierten Kupplungsbetätigung eines Kraftfahrzeuges bekannt, die automatisierte Kupplungsbetätigung erst nach einem zeitlichen Verzug auszuführen, wobei dessen Zeitdauer vom Übersetzungsverhältnis des Getriebes und von der Geschwindigkeit des Kraftfahrzeuges abhängt.

Aufgabe der Erfindung ist es, ein gattungsgemäßes Verfahren sicherer und komfortabler zu gestalten.

Die erläuterte Aufgabe ist gemäß der Erfindung mit den Merkmalen von Patentanspruch 1 in vorteilhafter Weise gelöst.

Ein Vorteil der Erfindung gemäß Patentanspruch 1 besteht darin, daß als Einflußgröße ein Abstand zum vorausfahrenden Fahrzeug erfaßt wird, der mit einer bestimmten Wahrscheinlichkeit auf eine zeitlich folgende Gefahrensituation bzw. deren Beendung schließen lässt, so daß die Kupplung in eine Betriebsstellung (geöffnet oder geschlossen) versetzt werden kann, die eine schnellere Ausführung des anschließenden Fahrerwunsches - wie beispielsweise eine Beschleunigungsanforderung oder eine Bremsanforderung - ermöglicht.

Ein Vorteil der Erfindung gemäß den Patentansprüchen 3, 4, 17, 22 besteht darin, daß eine Bremsung wie beispielsweise eine Vollbremsung in einer Gefahrensituation durchgeführt werden kann, ohne daß die Bremsanlage ein zusätzliches Bremsmoment aufbringen muß, um die Ausgangswelle des Antriebsmotors abzubremsen.

Ein Vorteil der Ausgestaltung gemäß dem Patentanspruch 15 ist der, daß Kraftstoff gespart wird, wenn eine Zurücknahme der Geschwindigkeit erwünscht ist.

Ein Vorteil der Verfahrensausgestaltung gemäß dem Patentanspruch 16 besteht darin, daß der Fahrzeugführer eine Rückmeldung erhält, bei welcher Auslenkung bzw. bei welchem Winkel des Fahrpedals die Kupplung die Betriebsstellung wechselt. Somit wird bei Fahrzeugführern, die sich unsicher über die Betriebsstellung der Kupplung sind, und die mit Bestimmtheit eine bestimmte Betriebsstellung der Kupplung erreichen wollen, in vorteilhafter Weise verhindert, daß diese Fahrzeugführer das Fahrpedal maximal in eine der beiden möglichen Richtungen auslenken müssen. Dadurch werden neben dem subjektiv sichereren Fahrgefühl Vorteile bezüglich des Kraftstoffverbrauches und der Fahrsicherheit erreicht.

Der Patentanspruch 18 zeigt eine Ausführung des erfindungsgemäßen Verfahrens, bei dem in vorteilhafter Weise im antriebslosen Fahrbetrieb im Gefälle die Kupplung geschlossen wird, um das Schleppmoment des Antriebsmotors zur Abbremsung des Kraftfahrzeuges auszunutzen.

Ein Vorteil der Erfindung gemäß Patentanspruch 19 besteht darin, daß das Kraftfahrzeug auch dann beschleunigt werden kann, wenn sich das Fahrpedal in einer Stellung befindet, die der momentanen Geschwindigkeit des Kraftfahrzeuges entspricht. Diese Situation, daß eine relativ hohe Änderungsgeschwindigkeit des Fahrpedals erfaßt wird, und das Fahrzeug trotzdem eine Geschwindigkeit aufweist, die der Stellung des Fahrpedals entspricht, kann beispielsweise bei einem Verfahren zum Betreiben einer Antriebsanordnung in einem Kraftfahrzeug auftreten, bei dem ein Toleranzbereich für den Fahrpedalwinkel vorgesehen ist, innerhalb dessen keine Beendigung der antriebslosen Fahrbetriebsphase erfolgt.

Ein Vorteil der Erfindung gemäß Patentanspruch 20 besteht darin, daß die Kupplung bei der Fahrt mit hoher Geschwindigkeit in einer engen Kurve bereits vor einer Betätigung des Fahrpedals geschlossen ist, so daß eine Beschleunigung aus der Kurve ohne Zeitverzögerung für das Schließen der Kupplung ermöglicht wird.

Ein Vorteil der Erfindung gemäß Patentanspruch 5 besteht darin, daß die Kupplung bei einer schnellen Zunahme des Abstandes zu einem vorausfahrenden Fahrzeug bereits vor einer Betätigung des Fahrpedals geschlossen ist, so daß eine Beschleunigung ohne Zeitverzögerung für das Schließen der Kupplung ermöglicht wird.

Die Patentansprüche 27 bis 32 zeigen vorteilhafte Ausgestaltungen des Verfahrens nach den Patentansprüchen 10, 11, 12. Die Aufnahme der Einflußgrößen (Topographie, Verkehrsregelung bzw. Gefahrensituationen) über einen Empfänger, der die Einflußgrößen über einen Sender erhält, bietet den Vorteil der Aktualität der Einflußgrößen. Die Speicherung der Einflußgrößen auf einem Datenträger im Kraftfahrzeug bietet den Vorteil der Unabhängigkeit von einem Sender bzw. vom Empfang.

Ein Vorteil der Erfindung gemäß den Patentansprüchen 8, 9 bzw. 33, 34, 35, 36 besteht darin, daß Eingriffe auf die Steuerung des Antriebsmotors, wie sie beispielsweise bei Fahrdynamiksystemen üblich sind, bei schlechten Witterungsverhältnissen immer möglich sind. Solche schlechten Witterungsverhältnisse stellen sich durch schlechte Sichtverhältnisse oder einen geringen Reibwert µ zwischen den Antriebsrädern und der Fahrbahn dar. Ein weiterer Vorteil des Unterbindens antriebsloser Fahrbetriebsphasen bei schlechten Witterungsverhältnissen, ist der, daß ein unstetiges Verhalten der Antriebsräder gegenüber der Fahrbahn (Einkuppelruck) verhindert wird und somit die Gefahr des Blockierens der Antriebsräder, wie es beispielsweise beim Aquaplaning auftritt, verhindert wird.

Die Ausführung des Verfahrens gemäß dem Patentanspruch 35 bietet weiterhin den Kostenvorteil, daß die Ermittlung des Reibwertes µ mittels der Drehzahldifferenz der Antriebsräder gegenüber den nicht-angetriebenen Rädern bei Fahrzeugen mit Fahrdynamiksystemen, wie beispielsweise dem elektronischen Stabilitätsprogramm ESP, ohne zusätzliche Sensorik durchgeführt werden kann. Dabei läßt auch die Anzahl der Eingriffe des ESP einen Rückschluß auf den Reibwert µ zwischen den Antriebsrädern und der Fahrbahn zu.

Weitere Vorteile der Erfindung gehen aus den übrigen Unteransprüchen und der Beschreibung hervor.

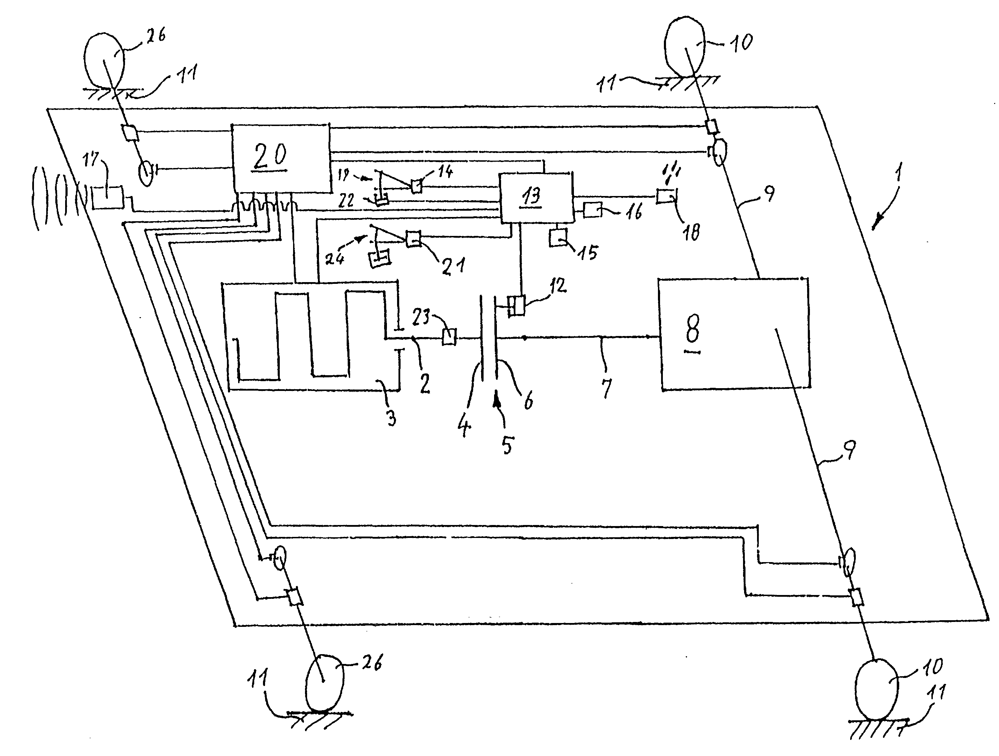

Die Erfindung ist nachstehend anhand einer in der Zeichnung schematisch dargestellten Ausführungsform näher beschrieben.

Die Zeichnung zeigt ein Übersichtsblockschaltbild einer Vorrichtung, bei der ein Verfahren zur Durchführung einer automatisierten Kupplungsbetätigung eines Kraftfahrzeuges 1 zur Wirkung kommt.

Dabei ist eine Ausgangswelle 2 eines Antriebsmotors 3 mit einer Kupplungshälfte 4 einer Kupplung 5 verbunden, wohingegen eine zweite Kupplungshälfte 6 der Kupplung 5 mit einer Eingangswelle 7 eines Getriebes 8 verbunden ist. Das Getriebe 8 treibt mittels Halbwellen 9 Antriebsräder 10 an, die im Fahrbetrieb gegenüber einer Fahrbahn 11 den Vortrieb des Kraftfahrzeuges 1 bewirken, wobei zwischen den Antriebsrädern 10 und der Fahrbahn 11 ein Reibwert µ wirksam ist. Das Kraftfahrzeug 1 weist weiterhin nicht-angetriebene Räder 26 auf, die ebenfalls auf der Fahrbahn 11 rollen.

Die beiden Kupplungshälften 4, 6 können mittels eines einund ausrückbaren Stellgliedes 12 miteinander verbunden und voneinander getrennt werden. Das Verbinden der Kupplungshälften 4, 6 miteinander wird als Schließen der Kupplung 5 und das Trennen der Kupplungshälften 4, 6 voneinander wird als Öffnen der Kupplung 5 bezeichnet. In einer angetriebenen Fahrbetriebsphase befindet sich die Kupplung 5 in der geschlossenen Betriebsstellung, wohingegen die Kupplung 5 in einer antriebslosen Fahrbetriebsphase des Kraftfahrzeuges 1 geöffnet ist.

Das Ein- und Ausrücken des Stellgliedes 12 bzw. das Öffnen und Schließen der Kupplung 5 wird von einem Steuergerät 13 gesteuert oder in einem alternativen Ausgestaltungsbeispiel geregelt. Diesem Steuergerät 13 werden Sensorsignale von
- einem Fahrpedalwinkelsensor 14,
- einem Querbeschleunigungssensor 15,
- einem Längsbeschleunigungssensor 16,
- einem Bremskraftsensor 21,
- einem Abstandsensor 17,
- einem Regensensor 18,
- einem Fahrdynamiksteuergerät 20 (wie Beispielsweise das elektronische Stabilitätsprogramm ESP) und
- einem Motordrehmomentsensor 23
zugeführt.

Mittels Auslenkung eines Fahrpedals 19 um einen Winkel wird ein Geschwindigkeitswunsch eingestellt. Der Fahrpedalwinkelsensor 14 nimmt den aktuellen Winkel des Fahrpedals 19 auf und gibt diesen an das Steuergerät 13 weiter. Das Steuergerät 13 gibt diesen Geschwindigkeitswunsch an den Antriebsmotor 3 weiter, bis die gewünschte Geschwindigkeit erreicht ist. Wird vom Motordrehmomentsensor 23 über einen bestimmten Zeitraum ein Drehmoment von näherungsweise Null gemessen, so gibt das Steuergerät 13 ein Signal an das Stellglied 12 zum Öffnen der Kupplung 5. Die Dauer des Zeitraums ist abhängig von der Antriebsmotordrehzahl und dem jeweils am Getriebe 8 eingestellten Übersetzungsverhältnis bzw. der sich daraus ergebenden Geschwindigkeit, wobei höhere Geschwindigkeiten einen geringeren Zeitraum abverlangen als niedrige Geschwindigkeiten. In dieser antriebslosen Fahrbetriebsphase ist das Fahrpedal 19 innerhalb eines Toleranzwinkels auslenkbar, ohne daß die Kupplung 5 wieder geschlossen wird. Dieser Toleranzwinkel ist begrenzt durch den oberen Grenzwert und den unteren Grenzwert. Diese Grenzwerte sind als Druckpunkte für den Fahrzeugführer spürbar gemacht. D.h., daß das Fahrpedal 19 ein Widerstandsstellglied 22 aufweist, mittels dessen sich ein Widerstand gegen ein Auslenken des Fahrpedals 19 einstellen läßt. Dieses Widerstandsstellglied 22 wird von dem Steuergerät 13 gesteuert, da die am Widerstandsstellglied 22 einzustellenden Druckpunkte abhängig vom eingestellten Geschwindigkeitswunsch, von der Antriebsmotordrehzahl und vom Übersetzungsverhältnis im Getriebe 8 sind.

Das Steuergerät 13 erfaßt die Änderungsgeschwindigkeit des Fahrpedalwinkels, indem dieser über die Zeit abgeleitet wird. Ist diese Ableitung bzw. Steigung größer als Null bzw. positiv, so wird diese als positive Änderungsgeschwindigkeit des Fahrpedalwinkels bezeichnet. Ist die Steigung hingegen kleiner als Null bzw. negativ, so wird die Änderungsgeschwindigkeit als negative Änderungsgeschwindigkeit des Fahrpedalwinkels bezeichnet. Demzufolge gibt das Vorzeichen (negativ oder positiv) an, in welche Richtung das Fahrpedal 19 ausgelenkt wird. Änderungsgeschwindigkeiten des Fahrpedalwinkels in Richtung der maximalen Auslenkung sind mit einem positiven Vorzeichen versehen, wohingegen Änderungsgeschwindigkeiten des Fahrpedalwinkels in Richtung des unbetätigten Fahrpedals 19 mit einem negativen Vorzeichen versehen sind. Beim Bezug auf eine beliebige Größe (beispielsweise einem Schwellwert) unterschreitet eine negative Änderungsgeschwindigkeit diese Größe unter anderem dann, wenn diese Größe mit einem negativen Vorzeichen versehen ist und der Absolutwert der Größe kleiner ist, als der Absolutwert der Änderungsgeschwindigkeit. Beispielsweise unterschreitet eine negative Änderungsgeschwindigkeit des Fahrpedalwinkels von -5 Grad/s einen Schwellwert von -4 Grad/s.

Im folgenden wird die Funktion der Sensoren 14, 15, 16, 21, 17, 18, 23 und des Fahrdynamiksteuergerätes 20 im Zusammenhang mit dem Steuergerät 13 und der Kupplung 5 erläutert.

Wird von dem Steuergerät 13 eine positive Änderungsgeschwindigkeit des Fahrpedalwinkels erfaßt, die über einem Schwellwert liegt, der von der Antriebsmotordrehzahl und dem jeweils am Getriebe 8 eingestellten Übersetzungsverhältnis abhängt, so wird die Kupplung 5 geschlossen. Somit ist gewährleistet, das der mittels des Fahrpedales 19 eingestellte Beschleunigungswunsch auch dann zu einer Beschleunigung des Kraftfahrzeuges 1 führt, wenn sich das Fahrpedal 19 innerhalb des Toleranzwinkels zwischen dem unteren Grenzwert und dem oberen Grenzwert des Fahrpedalwinkels befindet.

Wird von dem Steuergerät 13 eine negative Änderungsgeschwindigkeit des Fahrpedalwinkels erfaßt, die einen Schwellwert unterschreitet, der von der Antriebsmotordrehzahl und dem jeweils am Getriebe 8 eingestellten Übersetzungsverhältnis abhängt, so gibt das Steuergerät 13 ein Signal zum Öffnen der Kupplung 5 an das Stellglied 12. Durch diese Abkopplung des Antriebsmotors 3 vom Getriebe 8 kann eine anschließende Bremsung - wie beispielsweise eine Vollbremsung - eingeleitet werden, ohne daß die rotierende Ausgangswelle 2 des Antriebsmotors 3 mittels einer Bremsanlage des Kraftfahrzeuges 1 abgebremst werden muß.
Liegt diese negative Änderungsgeschwindigkeit jedoch über dem Schwellwert, bei dem von einer anschließenden Bremsung ausgegangen werden kann, jedoch unter einem weiteren antriebsmotordrehzahl- und übersetzungsverhältnisabhängigen Schwellwert und wird vom Kraftfahrzeug 1 ein Gefälle sensiert, so wird die Kupplung 5 geschlossen, falls sich diese in der geöffneten Betriebsstellung befindet. Dadurch wird beispielsweise beim Fahrbetrieb im Gefälle die Bremsleistung des Antriebsmotors 3 ausgenutzt. Die Ermittlung des Gefälles erfolgt aufgrund von Auswertungen des Fahrdynamiksteuergerätes 20 oder in einer alternativen Ausgestaltung mittels eines Neigungssensors.

Wird von dem Steuergerät 13 mittels des Querbeschleunigungssensors 15 eine Querbeschleunigung erfaßt, die über einem Schwellwert liegt, der von der Antriebsmotordrehzahl, dem jeweils am Getriebe 8 eingestellten Übersetzungsverhältnis und der Fahrzeuggeschwindigkeit abhängt, wird die Kupplung 5 automatisch geschlossen. Dadurch kann ein mittels der Fahrpedals angeforderter Beschleunigungswunsch aus einer Kurve erfüllt werden, ohne daß das Schließen der Kupplung 5 abgewartet werden muß.

Wird von dem Steuergerät 13 eine die Betätigung der Bremse 24 repräsentierende Größe mittels des Bremskraftsensors 21 ermittelt, die über einem Schwellwert liegt, der von der Antriebsmotordrehzahl, dem jeweils am Getriebe 8 eingestellten Übersetzungsverhältnis und der Fahrzeuggeschwindigkeit abhängt, so wird die Kupplung 5 von der Steuereinheit 13 mittels des Stellgliedes 12 geöffnet. Durch diese Abkopplung des Antriebsmotors 3 vom Getriebe 8 kann eine anschließende Bremsung - wie beispielsweise eine Vollbremsung - eingeleitet werden, ohne daß die Ausgangswelle 2 des Antriebsmotors 3 abgebremst werden muß.
Die die Betätigung der Bremse 24 repräsentierende Größe kann beispielsweise der Bremspedalwinkel und/oder der Bremsdruck sein.

Das Steuergerät 13 erfaßt die Änderungsgeschwindigkeit der Bremskraft, indem diese über die Zeit abgeleitet wird. Ist diese Ableitung bzw. Steigung größer als Null bzw. positiv, so wird diese als positive Änderungsgeschwindigkeit der Bremskraft bezeichnet. Ist die Steigung hingegen kleiner als Null bzw. Negativ, so wird die Änderungsgeschwindigkeit als negative Änderungsgeschwindigkeit der Bremskraft bezeichnet. Demzufolge gibt das Vorzeichen (negativ oder positiv) an, ob die Bremskraft zu- oder abnimmt. Änderungsgeschwindigkeiten der Bremskraft in Richtung der maximalen Bremskraft sind mit einem positiven Vorzeichen versehen, wohingegen Änderungsgeschwindigkeiten der Bremskraft in Richtung der unbetätigten Bremse 24 mit einem negativen Vorzeichen versehen sind.

Wird von dem Steuergerät 13 eine positive Änderungsgeschwindigkeit der Bremskraft erfaßt, die über einem Schwellwert liegt, der von der Antriebsmotordrehzahl und dem jeweils am Getriebe 8 eingestellten Übersetzungsverhältnis abhängt, so wird die Kupplung 5 geöffnet, um eine anschließende Bremsung zu ermöglichen, ohne daß die Ausgangswelle 2 des Antriebsmotors 3 abgebremst werden muß.

Wird von dem Steuergerät 13 eine negative Änderungsgeschwindigkeit der Bremskraft erfaßt, die über einem Schwellwert liegt, der von der Antriebsmotordrehzahl und dem jeweils am Getriebe 8 eingestellten Übersetzungsverhältnis abhängt, so wird die Kupplung 5 geschlossen, um einen anschließenden Beschleunigungswunsch des Kraftfahrzeuges 1 mittels des Fahrpedals 19 zu ermöglichen, ohne daß das Schließen der Kupplung 5 abgewartet werden muß.

Wird von dem Steuergerät 13 mittels des Abstandsensors 17 ein Abstand zum vorausfahrenden Fahrzeug erfaßt, der unter einem Schwellwert liegt, der von der Antriebsmotordrehzahl und dem jeweils am Getriebe 8 eingestellten Übersetzungsverhältnis bzw. der Geschwindigkeit abhängt, so wird die Kupplung 5 geöffnet. Durch diese Abkopplung des Antriebsmotors vom Getriebe 8 kann eine anschließende Bremsung - wie beispielsweise eine Vollbremsung - eingeleitet werden, ohne daß die Ausgangswelle 2 des Antriebsmotors 3 mittels der Bremsanlage abgebremst werden muß.

Dieser Schwellwert ist derart von der Geschwindigekit abhängig, daß bei hohen Geschwindigkeiten des Kraftfahrzeuges 1 bereits bei einem realtiv großen Abstand zum vorausfahrenden Fahrzeug die Kupplung 5 in Erwartung einer Bremsung geöffnet wird, während bei niedrigen Geschwindigkeiten erst bei relativ kleinen Abständen die Kupplung 5 in Erwartung einer Bremsung geöffnet wird.

Das Steuergerät 13 erfaßt die Änderungsgeschwindigkeit des Abstandes zum vorausfahrenden Fahrzeug, indem dieser über die Zeit abgeleitet wird. Dabei ist eine Änderungsgeschwindigkeit des Abstandes, der eine Abstandsvergrößerung zugrunde liegt positiv, wohingegen eine Änderungsgeschwindigkeit des Abstandes, der eine Abstandsverringerung zugrunde liegt, negativ ist.

Erfaßt das Steuergerät 13 eine negative Änderungsgeschwindigkeit des Abstands, die unter einem Schwellwert liegt, der von der Antriebsmotordrehzahl und dem jeweils am Getriebe 8 eingestellten Übersetzungsverhältnis abhängt, so wird die Kupplung 5 geöffnet.
Durch diese Abkopplung des Antriebsmotors 3 vom Getriebe 8 kann eine anschließende Bremsung - wie beispielsweise eine Vollbremsung - eingeleitet werden, ohne daß die Ausgangswelle 2 des Antriebsmotors 3 mittels der Bremsanlage abgebremst werden muß.

Erhält das Steuergerät die Information, daß schlechte Witterungsverhältnisse vorliegen, so wird die Kupplung 5 geschlossen. Gleichzeitig werden antriebslose Fahrbetriebsphasen unterbunden. Dadurch wird bei Regen, Nebel und Glätte ein übermäßiges Öffnen und Schließen der Kupplung 5 und somit ein Einkuppelruck beim Schließen verhindert. Desweiteren werden dem Fahrdynamiksteuergerät 20 wirksame Motoreingriffe ermöglicht.
Die schlechten Witterungsverhältnisse werden zum einen mittels des Regensensors 18 ermittelt. Desweiteren lassen sich dem Fahrdynamiksteuergerät 20 Informationen über den Reibwert µ zwischen den Antriebsrädern 10 und der Fahrbahn 11 entnehmen, da dieses Fahrdynamiksteuergerät 20 die Drehzahldifferenz der Antriebsräder 10 gegenüber den nicht-angetriebenen Rädern 26 mißt.
Informationen über Witterungsverhältnisse lassen sich jedoch auch über den Zustand der Nebelschlußleuchte bzw. von den Nebelscheinwerfern (eingeschaltet oder ausgeschaltet) ermitteln. Beispielsweise können Informationen über den Zustand der Fahrbahn 11 bzw. über den Reibwert µ auch einem Reflexionssensor entnommen werden, der die Reflexion von Licht auf der Fahrbahn 11 mißt. Zur Ermittlung der Witterungs- und insbesondere der Sichtverhältnisse ist es möglich einen Infrarotsensor zu verwenden, der die Reflexion von Infrarotlicht an Teilchen (beispielsweise Nebel oder Staub) erfaßt.

In dem Steuergerät 13 ist eine aktualisierbare Speichereinheit integriert, die auf einem virtuellen Straßennetz die Einflußgrößen darstellt, die für die Betriebsstellung der Kupplung 5 relevant sind. Die aktuelle Position des Kraftfahrzeuges 1 wird mittels Satellitenpeilung ermittelt und jederzeit mit dem virtuellen Straßennetz verglichen. Die in diesem virtuellen Straßennetz dargestellten Einflußgrößen lassen sich in drei Bereiche:
- topographische Einflußgrößen,
- verkehrsregelnde Einflußgrößen und
- Gefahrenstellen betreffende Einflußgrößen
unterteilen.

Topographische Einflußgrößen umfassen u.a. Höhenunterschiede der Fahrstrecke. Mittels dieser Einflußgrößen kann das Steuergerät 13 beispielsweise vorausbestimmen, ob eine Öffnung der Kupplung 5 bei Sensierung eines Drehmomentes von Null mittels des Motordrehmomentsensors 23 sinnvoll ist oder ob aufgrund eines folgenden Anstieges die Kupplung 5 geschlossen bleibt. Desweiteren können Unstetigkeiten des Fahrbahnverlaufes (z.B. langes Gefälle, das durch einen kurzen Anstieg unterbrochen ist) derart berücksichtigt werden, daß diese im antriebslosen Fahrbetrieb nicht zum Schließen der Kupplung 5 führen.

Verkehrsregelnde Einflußgrößen umfassen u.a. die Position von Geschwindigkeitsbegrenzungen oder Stoppschildern auf der Fahrstrecke.

Gefahrenstellen betreffende Einflußgrößen umfassen beispielsweise die Position von Brücken mit Glatteisgefahr oder S-Kurven. Vor dem Erreichen dieser Gefahrenstellen wird die Kupplung 5 automatisiert geschlossen und im Bereich dieser Gefahrenstellen geschlossen gehalten. Somit wird dem Fahrdynamiksteuergerät 20 ein wirksamer Eingriff auf die Antriebsmotordrehzahl ermöglicht.

Die Einflußgrößen (topographisch, verkehrsregelnd und Gefahrenstellen betreffend) sind mittels eines Funknetzes aktualisierbar.

Die Schwellwerte, deren Über- bzw. Unterschreitung zu einer Öffnung der Kupplung 5 in Erwartung einer Bremsung führen, weisen bei hohen Drehzahlen - d.h. wenn das Schleppmoment des Antriebsmotors besonders groß ist - einen größeren Absolutwert auf, als bei niedrigen Drehzahlen. Dadurch kann das Schleppmoment des Antriebsmotors 3 bei hohen Drehzahlen zur Unterstützung einer Bremsung genutzt werden, während bei niedrigen Drehzahlen - d.h. wenn das Schleppmoment des Antriebsmotors 3 besonders gering ist - die Kupplung 5 vor Beginn der Bremsung geöffnet wird.

Analog dazu weisen die Schwellwerte, deren Über bzw. Unterschreitung zu einer Öffnung der Kupplung in Erwartung einer Bremsung führen, bei einem niedrigen Gang bzw. einem großen Übersetzungsverhältnis - d.h. wenn das Schleppmoment des Antriebsmotors besonders groß ist - einen größeren Absolutwert auf, als im hohen Gang bzw. bei einem kleinen Übersetzungsverhältnis.

Bei der aufgeführten Ausführungsform kann der Antriebsmotor 3 bei geöffneter Kupplung 5 im Leerlauf betrieben werden. In einer weiteren Ausführungsform kann die Kraftstoffzufuhr des Antriebsmotors bei geöffneter Kupplung unterbrochen werden. Es ist auch möglich, die Bedingungen für das Öffnen und Schließen der Kupplung so miteinander zu verknüpfen, daß ausschließlich in den Situationen, in denen davon auszugehen ist, daß die Kupplung über einen längeren Zeitraum geöffnet bleibt, die Kraftstoffzufuhr des Antriebsmotors unterbrochen wird.

In einer weiteren Ausgestaltung der Erfindung kann die Kupplung bei Erfassung einer unter dem variablen Schwellwert liegenden negativen Änderungsgeschwindigkeit des Abstands zu einem vorausfahrenden Fahrzeug geschlossen werden, wenn die Kupplung sich zuvor im geöffneten Zustand befunden hat und ein niedriger Gang - d.h. ein großes Übersetzungsverhältnis - im Getriebe eingelegt ist. Durch das in dieser Situation hohe Schleppmoment des Antriebsmotors wird eine Bremsung des Kraftfahrzeuges bzw. eine Vergrößerung des Abstandes zum vorausfahrenden Fahrzeug erreicht.

Das Getriebe des Kraftfahrzeuges kann sowohl als manuell geschaltetes Getriebe, als teil- oder vollautomatisiertes Getriebe, als Automatikgetriebe oder aber als stufenloses Getriebe ausgestaltet sein. Bei manuellen geschalteten und bei automatisierten Getrieben, wie beispielsweise Vorgelegegetrieben kann die Anfahrkupplung genutzt werden, um das Kraftfahrzeug vom angetriebenen in den antriebslosen Zustand zu versetzen. Eine mögliche Ausführungsform eines Vorgelegegetriebes ist das Doppelkupplungsgetriebe. Als stufenloses Getriebe bietet sich sowohl ein Umschlingungsgetriebe als auch ein Toroidgetriebe an. Automatikgetriebe können in die Neutralstellung geschaltet werden, um das Kraftfahrzeug von der angetriebenen in die antriebslose Fahrbetriebsphase zu versetzen. Die antriebslose Fahrbetriebsphase kann somit durch Öffnung einer beliebigen dazu geeigneten Kupplung innerhalb des Getriebes erfolgen.

Der Antriebsmotor kann sowohl eine Brennkraftmaschine als auch ein Elektromotor sein.

In einer weiteren Ausführung des Verfahrens wird alternativ zur Öffnung der Kupplung bei Übertragung eines Drehmomentes von Null die Kupplung dann geöffnet, wenn sowohl der Fahrpedalwinkel als auch die Fahrzeuggeschwindigkeit über einen bestimmten Zeitraum zwischen beispielsweise 0 und 3 Sekunden zumindest näherungsweise konstant bleibt.

In einer weiteren Ausgestaltung der Erfindung werden die Schwellwerte an einen Fahrertyp des Fahrzeugführers angepaßt. Zu diesem Zweck weist die Vorrichtung, bei der ein Verfahren zur Durchführung einer automatisierten Kupplungsbetätigung eines Kraftfahrzeuges zur Wirkung kommt, eine speicherfähige Signalverarbeitungsvorrichtung auf. Diese Signalverarbeitungsvorrichtung erkennt aufgrund geeigneter im Kraftfahrzeug ermittelter Einflußgrößen - wie beispielsweise die Längsbeschleunigung und die Querbeschleunigung - den Fahrertyp und speichert die Information über dessen Fahrverhalten.
Mit dieser vorliegenden Information können die Schwellwerte, die zum Öffnen und Schließen der Kupplung führen, fahrerangepaßt verändert werden.
Inwieweit die Schwellwerte verändert werden, hängt dabei von den Komfort- und den Sicherheitsanforderungen an das Fahrzeug ab. So können die Schwellwerte bei einem sportlichen Fahrer dahingehend geändert werden, daß die Kupplung über einen weiten Bereich geschlossen bleibt, um bei dem sportlichen Fahrer ein von diesem erwünschtes schnelleres Ansprechen auf Beschleunigungen zu ermöglichen. Aus Sicherheitsgründen kann jedoch auch gerade für den zurückhaltenden Fahrer die Kupplung über einen weiten Bereich geschlossen bleiben, um dessen - im Verhältnis zum sportlichen Fahrer - ruhige Beschleunigungsanforderungen auch in Gefahrensituationen schnell auszuführen.

## Patentansprüche

1. Verfahren zur Durchführung einer automatisierten Kupplungsbetätigung eines Kraftfahrzeuges (1) mit einem Antriebsmotor (3) und einem mit diesem über eine Kupplung (5) verbundenen Getriebe (8) oder einem mit diesem verbundenen Getriebe, welches über eine Kupplung verfügt, bei dem die Kupplung (5) sowohl eine geöffnete als auch eine geschlossene Betriebsstellung aufweist, wobei die Kupplung (5) zur Einleitung von antriebslosen Fahrbetriebsphasen automatisiert in die geöffnete Betriebsstellung und zur Einleitung von angetriebenen Fahrbetriebsphasen automatisiert in die geschlossene Betriebsstellung überführt wird,
**dadurch gekennzeichnet,**
**dass** ein Abstand zum vorausfahrenden Fahrzeug ermittelt wird, und die Betriebsstellung der Kupplung (5) abhängig von diesem Abstand ist.

2. Verfahren zur Durchführung einer automatisierten Kupplungsbetätigung nach Patentanspruch 1,
**dadurch gekennzeichnet,**
**daß** der Abstand über die Zeit erfaßt wird und daraus die Änderungsgeschwindigkeit des Abstands zu einem vorausfahrenden Fahrzeug abgeleitet wird.

3. Verfahren zur Durchführung einer automatisierten Kupplungsbetätigung nach Patentanspruch 2,
**dadurch gekennzeichnet,**
**daß** die Kupplung (5) automatisiert geöffnet wird, wenn die Änderungsgeschwindigkeit des Abstands einen negativen Schwellwert unterschreitet.

4. Verfahren zur Durchführung einer automatisierten Kupplungsbetätigung nach Patentanspruch 1,
**dadurch gekennzeichnet,**
**daß** die Kupplung (5) automatisiert geöffnet wird, wenn ein Schwellwert des Abstands unterschritten wird.

5. Verfahren zur Durchführung einer automatisierten Kupplungsbetätigung nach Patentanspruch 2,
**dadurch gekennzeichnet,**
**daß** die Kupplung (5) automatisiert geschlossen wird, wenn die Änderungsgeschwindigkeit des Abstands positiv ist und einen Schwellwert überschreitet.

6. Verfahren zur Durchführung einer automatisierten Kupplungsbetätigung nach Patentanspruch 1,
**dadurch gekennzeichnet,**
**daß** ein Fahrpedalwinkel erfaßt wird, und daß der Fahrpedalwinkel über die Zeit erfaßt wird und daraus die Änderungsgeschwindigkeit des Fahrpedalwinkels abgeleitet wird und die Betriebsstellung der Kupplung (5) abhängig von dieser Änderungsgeschwindigkeit ist.

7. Verfahren zur Durchführung einer automatisierten Kupplungsbetätigung nach Patentanspruch 1,
**dadurch gekennzeichnet,**
**daß** eine Querbeschleunigung erfaßt wird und die Betriebsstellung der Kupplung (5) abhängig von der Querbeschleunigung ist.

8. Verfahren zur Durchführung einer automatisierten Kupplungsbetätigung nach Patentanspruch 1,
**dadurch gekennzeichnet,**
**daß** zumindest ein die Sichtverhältnisse repräsentierender Sichtwert erfaßt wird und die Kupplung (5) automatisiert geschlossen wird, wenn ein Schwellwert unterschritten wird und daß die antriebslosen Fahrbetriebsphasen unterbunden werden, solange der Schwellwert unterschritten bleibt.

9. Verfahren zur Durchführung einer automatisierten Kupplungsbetätigung nach Patentanspruch 1,
**dadurch gekennzeichnet,**
**daß** der Vortrieb des Kraftfahrzeuges (1) gegenüber einer Fahrbahn (11) mittels Antriebsrädern (10) erfolgt, und daß eine den Reibwert (µ) zwischen den Antriebsrädern (10) und der Fahrbahn (11) repräsentierende Größe ermittelt wird und die Kupplung (5) automatisiert geschlossen wird, wenn die Größe einen Schwellwert unterschreitet und daß die antriebslosen Fahrbetriebsphasen unterbunden werden, solange der Schwellwert unterschritten bleibt.

10. Verfahren zur Durchführung einer automatisierten Kupplungsbetätigung nach Patentanspruch 1,
**dadurch gekennzeichnet,**
**daß** im Kraftfahrzeug (1) ein virtuelles Straßennetz vorliegt, welches topographische Einflußgrößen der Fahrstrecke beschreibt und die Betriebsstellung der Kupplung (5) abhängig von diesen Einflußgrößen ist.

11. Verfahren zur Durchführung einer automatisierten Kupplungsbetätigung nach Patentanspruch 1,
**dadurch gekennzeichnet,**
**daß** im Kraftfahrzeug (1) ein virtuelles Straßennetz vorliegt, welches verkehrsregelnde Einflußgrößen der Fahrstrecke beschreibt und die Betriebsstellung der Kupplung (5) abhängig von diesen Einflußgrößen ist.

12. Verfahren zur Durchführung einer automatisierten Kupplungsbetätigung nach Patentanspruch 1,
**dadurch gekennzeichnet,**
**daß** im Kraftfahrzeug (1) ein virtuelles Straßennetz vorliegt, welches Gefahrenstellen betreffende Einflußgrößen der Fahrstrecke beschreibt und die Betriebsstellung der Kupplung (5) abhängig von diesen Einflußgrößen ist.

13. Verfahren zur Durchführung einer automatisierten Kupplungsbetätigung nach Patentanspruch 1,
**dadurch gekennzeichnet,**
**daß** eine die Betätigung der Bremse (24) repräsentierende Größe ermittelt wird, und daß die Kupplung (5) automatisiert geschlossen wird, wenn die Größe unter einen Schwellwert zurückgenommen wird und sich das Kraftfahrzeug (1) in der antriebslosen Fahrbetriebsphase befindet.

14. Verfahren zur Durchführung einer automatisierten Kupplungsbetätigung nach Patentanspruch 1,
**dadurch gekennzeichnet,**
**daß** eine die Betätigung der Bremse (24) repräsentierende Größe ermittelt wird, und daß diese Größe über die Zeit erfaßt wird und daraus die Änderungsgeschwindigkeit dieser Größe erfaßt wird und die Betriebsstellung der Kupplung (5) abhängig von dieser Änderungsgeschwindigkeit ist.

15. Verfahren zur Durchführung einer automatisierten Kupplungsbetätigung nach Patentanspruch 1,
**dadurch gekennzeichnet,**
**daß** die Fahrgeschwindigkeit mittels eines Fahrpedalwinkels eines Fahrpedales (19) vorgegeben wird, dessen Auslenkung innerhalb eines Toleranzwinkels in der antriebslosen Fahrbetriebsphase nicht zum Schließen der Kupplung (5) führt, wobei der Toleranzwinkel einen unteren und einen oberen Grenzwert aufweist und bei dem der untere Grenzwert einer Antriebsmotordrehzahlrücknahme zugeordnet ist und eine Unterschreitung dieses unteren Grenzwertes neben einem automatisierten Schließen der Kupplung (5) zu einer Unterbrechung einer Kraftstoffzufuhr des Antriebsmotors (3) führt.

16. Verfahren zur Durchführung einer automatisierten Kupplungsbetätigung nach Patentanspruch 15,
**dadurch gekennzeichnet,**
**daß** dem Fahrzeugführer die beiden Grenzwerte als Widerstand (Druckpunkte) spürbar sind.

17. Verfahren zur Durchführung einer automatisierten Kupplungsbetätigung nach Patentanspruch 6,
**dadurch gekennzeichnet,**
**daß** die Kupplung (5) automatisiert geöffnet wird, wenn die Änderungsgeschwindigkeit des Fahrpedalwinkels negativ ist und einen Schwellwert unterschreitet.

18. Verfahren zur Durchführung einer automatisierten Kupplungsbetätigung nach Patentanspruch 6,
**dadurch gekennzeichnet,**
**daß** erfaßt wird, ob sich das Kraftfahrzeug (1) in einem Gefälle befindet und daß die Kupplung (5) automatisiert geschlossen wird, wenn zum einen ein Gefälle erfaßt wird und zum anderen die Änderungsgeschwindigkeit des Fahrpedalwinkels negativ ist und einen Schwellwert unterschreitet.

19. Verfahren zur Durchführung einer automatisierten Kupplungsbetätigung nach Patentanspruch 6,
**dadurch gekennzeichnet,**
**daß** die Kupplung (5) automatisiert geschlossen wird, wenn die Änderungsgeschwindigkeit des Fahrpedalwinkels positiv ist und einen Schwellwert überschreitet.

20. Verfahren zur Durchführung einer automatisierten Kupplungsbetätigung nach Patentanspruch 7,
**dadurch gekennzeichnet,**
**daß** die Kupplung (5) automatisiert geschlossen wird, wenn ein Schwellwert der Querbeschleunigung überschritten wird.

21. Verfahren zur Durchführung einer automatisierten Kupplungsbetätigung nach Patentanspruch 14,
**dadurch gekennzeichnet,**
**daß** die Kupplung (5) automatisiert geschlossen wird, wenn die Änderungsgeschwindigkeit der die Betätigung der Bremse (24) repräsentierende Größe negativ ist und einen Schwellwert unterschreitet.

22. Verfahren zur Durchführung einer automatisierten Kupplungsbetätigung nach Patentanspruch 14,
**dadurch gekennzeichnet,**
**daß** die Kupplung (5) automatisiert geöffnet wird, wenn die Änderungsgeschwindigkeit der die Betätigung der Bremse (24) repräsentierende Größe positiv ist und einen Schwellwert überschreitet.

23. Verfahren zur Durchführung einer automatisierten Kupplungsbetätigung nach einem der Patentansprüche 3, 4, 5, 8, 9, 13, 17, 18, 19, 20, 21, 22,
**dadurch gekennzeichnet,**
**daß** der jeweilige Schwellwert abhängig von einer Geschwindigkeit des Kraftfahrzeuges (1) ist.

24. Verfahren zur Durchführung einer automatisierten Kupplungsbetätigung nach einem der Patentansprüche 3, 4, 5, 8, 9, 13, 17, 18, 19, 20, 21, 22,
**dadurch gekennzeichnet,**
**daß** der jeweilige Schwellwert abhängig von der Drehzahl des Antriebsmotors (3) ist.

25. Verfahren zur Durchführung einer automatisierten Kupplungsbetätigung nach einem der Patentansprüche 3, 4, 5, 8, 9, 13, 17, 18, 19, 20, 21, 22,
**dadurch gekennzeichnet,**
**daß** der jeweilige Schwellwert abhängig von einem an dem Getriebe (8) eingestellten Übersetzungsverhältnis ist.

26. Verfahren zur Durchführung einer automatisierten Kupplungsbetätigung nach einem der Patentansprüche 3, 4, 5, 8, 9, 13, 17, 18, 19, 20, 21, 22,
**dadurch gekennzeichnet,**
**daß** eine das Fahrverhalten des Fahrzeugführers repräsentierende Größe im Kraftfahrzeug (1) vorliegt und der jeweilige Schwellwert abhängig von dieser Größe ist.

27. Verfahren zur Durchführung einer automatisierten Kupplungsbetätigung nach Patentanspruch 10,
**dadurch gekennzeichnet,**
**daß** das Kraftfahrzeug (1) einen Empfänger aufweist, der die Einflußgrößen von einem Sender aufnimmt.

28. Verfahren zur Durchführung einer automatisierten Kupplungsbetätigung nach Patentanspruch 11,
**dadurch gekennzeichnet,**
**daß** das Kraftfahrzeug (1) einen Empfänger aufweist, der die Einflußgrößen von einem Sender aufnimmt.

29. Verfahren zur Durchführung einer automatisierten Kupplungsbetätigung nach Patentanspruch 12,
**dadurch gekennzeichnet,**
**daß** das Kraftfahrzeug (1) einen Empfänger aufweist, der die Einflußgrößen von einem Sender aufnimmt.

30. Verfahren zur Durchführung einer automatisierten Kupplungsbetätigung nach Patentanspruch 10,
**dadurch gekennzeichnet,**
**daß** die Einflußgrößen in gespeicherter Form auf einem Datenträger im Kraftfahrzeug (1) vorliegen.

31. Verfahren zur Durchführung einer automatisierten Kupplungsbetätigung nach Patentanspruch 11,
**dadurch gekennzeichnet,**
**daß** die Einflußgrößen in gespeicherter Form auf einem Datenträger im Kraftfahrzeug (1) vorliegen.

32. Verfahren zur Durchführung einer automatisierten Kupplungsbetätigung nach Patentanspruch 12,
**dadurch gekennzeichnet,**
**daß** die Einflußgrößen in gespeicherter Form auf einem Datenträger im Kraftfahrzeug (1) vorliegen.

33. Verfahren zur Durchführung einer automatisierten Kupplungsbetätigung nach Patentanspruch 8,
**dadurch gekennzeichnet,**
**daß** der die Sichtverhältnisse repräsentierende Sichtwert ein Regensensor (18) ist.

34. Verfahren zur Durchführung einer automatisierten Kupplungsbetätigung nach Patentanspruch 8,
**dadurch gekennzeichnet,**
**daß** der die Sichtverhältnisse repräsentierende Sichtwert abhängig vom Betriebszustand einer Nebelschlußleuchte oder eines Nebelscheinwerfers des Kraftfahrzeuges (1) ist.

35. Verfahren zur Durchführung einer automatisierten Kupplungsbetätigung nach Patentanspruch 9,
**dadurch gekennzeichnet,**
**daß** die den Reibwert (µ) zwischen den Antriebsrädern (10) und der Fahrbahn (11) repräsentierende Größe eine Drehzahldifferenz ist, die sich zwischen den Antriebsrädern (10) und den nicht-angetriebenen Rädern (26) einstellt.

36. Verfahren zur Durchführung einer automatisierten Kupplungsbetätigung nach Patentanspruch 9,
**dadurch gekennzeichnet,**
**daß** die den Reibwert (µ) zwischen den Antriebsrädern (10) und der Fahrbahn (11) repräsentierende Größe mittels eines Sensors ermittelt wird, der die Reflexion von Licht auf der Fahrbahn (11) mißt.

## Claims

1. A process for the automatic actuation of a clutch in a motor vehicle (1) having a drive engine (3) and a transmission (8) connected to said drive engine (3) via a clutch (5), or a transmission (8) connected to said drive engine which has a clutch, in which the clutch (5) has both an open and a closed operating position, the clutch (5) being shifted automatically into the open operating position to initiate coasting phases and being shifted automatically into the closed operating position to initiate drive phases,
**characterised in that**
the distance to the travelling vehicle in front is determined and the operating position of the clutch (5) is dependent upon this distance.

2. A process for the automatic actuation of a clutch in accordance with claim 1,
**characterised in that**
the distance is recorded over time and used to deduce the speed of change of the distance to a vehicle travelling in front.

3. A process for the automatic actuation of a clutch in accordance with claim 2,
**characterised in that**
the clutch (5) is opened automatically if the speed of change of the distance falls below a negative threshold value.

4. A process for the automatic actuation of a clutch in accordance with claim 1,
**characterised in that**
the clutch (5) is opened automatically if the distance falls below a threshold value.

5. A process for the automatic actuation of a clutch in accordance with claim 2,
**characterised in that**
the clutch (5) is closed automatically if the speed of change of the distance is positive and exceeds a threshold value.

6. A process for the automatic actuation of a clutch in accordance with claim 1,
**characterised in that**
an accelerator pedal angle is recorded, and the accelerator pedal angle is recorded over time and used to deduce the speed of change of the accelerator pedal angle and the operating position of the clutch (5) is dependent upon this speed of change.

7. A process for the automatic actuation of a clutch in accordance with claim 1,
**characterised in that**
a transverse acceleration is recorded and the operating position of the clutch (5) is dependent upon the transverse acceleration.

8. A process for the automatic actuation of a clutch in accordance with claim 1,
**characterised in that**
at least one visibility value representing the visibility conditions is recorded and the clutch (5) is closed automatically if it falls below a threshold value, and coasting phases are prevented as long as it remains below the threshold value.

9. A process for the automatic actuation of a clutch in accordance with claim 1,
**characterised in that**
the motor vehicle (1) is propelled along a road surface (11) by means of drive wheels (10), and a value representing the coefficient of friction (µ) between the drive wheels (10) and the road surface (11) is determined and the clutch (5) is automatically closed if the value falls below a threshold value, and coasting phases are prevented as long as it remains below the threshold value.

10. A process for the automatic actuation of a clutch in accordance with claim 1,
**characterised in that**
the motor vehicle (1) contains a virtual road network which describes topographic influencing variables on the section of road, and the operating position of the clutch (5) is dependent upon these influencing variables.

11. A process for the automatic actuation of a clutch in accordance with claim 1,
**characterised in that**
the motor vehicle (1) contains a virtual road network which describes traffic control influencing variables on the section of road, and the operating position of the clutch (5) is dependent upon these influencing variables.

12. A process for the automatic actuation of a clutch in accordance with claim 1,
**characterised in that**
the motor vehicle (1) contains a virtual road network which describes influencing variables relating to danger spots on the section of road, and the operating position of the clutch (5) is dependent upon these influencing variables.

13. A process for the automatic actuation of a clutch in accordance with claim 1,
**characterised in that**
a value representing the actuation of the brake (24) is determined, and the clutch is closed automatically if the value is taken back below a threshold value and the motor vehicle (1) is in a coasting phase.

14. A process for the automatic actuation of a clutch in accordance with claim 1,
**characterised in that**
a value representing the actuation of the brake (24) is determined, and this value is recorded over time and used to deduce the speed of change of this value and the operating position of the clutch (5) is dependent upon this speed of change.

15. A process for the automatic actuation of a clutch in accordance with claim 1,
**characterised in that**
the driving speed is set by means of the accelerator pedal angle of an accelerator pedal (19) and the deflection of said angle within an angle of tolerance in coasting phases does not lead to the closing of the clutch (5), the angle of tolerance having an upper and a lower limit value with the lower limit value being associated with a drop in drive engine speed and a drop in the angle of tolerance below this lower limit level resulting not only in the automatic closing of the clutch (5), but also in the cutting off of the fuel supply to the drive engine (3).

16. A process for the automatic actuation of a clutch in accordance with claim 15,
**characterised in that**
the driver of the vehicle is able to sense the two limit values as resistance (pressure points).

17. A process for the automatic actuation of a clutch in accordance with claim 6,
**characterised in that**
the clutch (5) is opened automatically if the speed of change of the accelerator pedal angle is negative and falls below a threshold value.

18. A process for the automatic actuation of a clutch in accordance with claim 6,
**characterised in that**
whether or not the motor vehicle (1) is on a descending gradient is recorded, and the clutch (5) is closed automatically if, firstly, a descending gradient is recorded and, secondly, the speed of change of the accelerator pedal angle is negative and falls below a threshold value.

19. A process for the automatic actuation of a clutch in accordance with claim 6,
**characterised in that**
the clutch (5) is closed automatically if the speed of change of the accelerator pedal angle is positive and exceeds a threshold value.

20. A process for the automatic actuation of a clutch in accordance with claim 7,
**characterised in that**
the clutch (5) is closed automatically if transverse acceleration exceeds a threshold value.

21. A process for the automatic actuation of a clutch in accordance with claim 14,
**characterised in that**
the clutch (5) is closed automatically if the speed of change of the value representing the actuation of the brake (24) is negative and falls below a threshold value.

22. A process for the automatic actuation of a clutch in accordance with claim 14,
**characterised in that**
the clutch (5) is opened automatically if the speed of change of the value representing the actuation of the brake (24) is positive and exceeds a threshold value.

23. A process for the automatic actuation of a clutch in accordance with one of claims 3, 4, 5, 8, 9, 13, 17, 18, 19, 20, 21, 22,
**characterised in that**
the relevant threshold value is dependent upon the speed of the motor vehicle (1).

24. A process for the automatic actuation of a clutch in accordance with one of claims 3, 4, 5, 8, 9, 13, 17, 18, 19, 20, 21, 22,
**characterised in that**
the relevant threshold value is dependent upon the speed of the drive engine (3).

25. A process for the automatic actuation of a clutch in accordance with one of claims 3, 4, 5, 8, 9, 13, 17, 18, 19, 20, 21, 22,
**characterised in that**
the relevant threshold value is dependent upon a transmission ratio set at the transmission (8).

26. A process for the automatic actuation of a clutch in accordance with one of claims 3, 4, 5, 8, 9, 13, 17, 18, 19, 20, 21, 22,
**characterised in that**
a value representing the driving behaviour of the driver of the vehicle is present available in the vehicle (1) and the relevant threshold value is dependent upon this value.

27. A process for the automatic actuation of a clutch in accordance with claim 10,
**characterised in that**
the motor vehicle (1) has a receiver which receives the influencing variables from a transmitter.

28. A process for the automatic actuation of a clutch in accordance with claim 11,
**characterised in that**
the motor vehicle (1) has a receiver which receives the influencing variables from a transmitter.

29. A process for the automatic actuation of a clutch in accordance with claim 12,
**characterised in that**
the motor vehicle (1) has a receiver which receives the influencing variables from a transmitter.

30. A process for the automatic actuation of a clutch in accordance with claim 10,
**characterised in that**
the influencing variables are present in the motor vehicle (1) in stored form in a data carrier.

31. A process for the automatic actuation of a clutch in accordance with claim 11,
**characterised in that**
the influencing variables are present in the motor vehicle (1) in stored form in a data carrier.

32. A process for the automatic actuation of a clutch in accordance with claim 12,
**characterised in that**
the influencing variables are present in the motor vehicle (1) in stored form in a data carrier.

33. A process for the automatic actuation of a clutch in accordance with claim 8,
**characterised in that**
the visibility value representing the visibility conditions is a rain sensor (18).

34. A process for the automatic actuation of a clutch in accordance with claim 8,
**characterised in that**
the visibility value representing the visibility conditions is dependent upon the operating state of a rear fog lamp or a front fog lamp on the motor vehicle (1).

35. A process for the automatic actuation of a clutch in accordance with claim 9,
**characterised in that**
the value representing the coefficient of friction (µ) between the drive wheels (10) and the road surface (11) is an engine speed difference which arises between the drive wheels (10) and the non-driven wheels (26).

36. A process for the automatic actuation of a clutch in accordance with claim 9,
**characterised in that**
the value representing the coefficient of friction (µ) between the drive wheels (10) and the road surface (11) is determined by means of a sensor which measures the reflection of light on the road surface (11).

## Revendications

1. Procédé pour réaliser un actionnement automatisé d'embrayage d'un véhicule automobile (1), comportant un moteur d'entraînement (3) et une boîte de vitesses (8) reliée à ce moteur par l'intermédiaire d'un embrayage (5), ou une boîte de vitesses reliée à ce moteur et qui comporte un embrayage, selon lequel l'embrayage (5) possède aussi bien une position de fonctionnement ouverte qu'une position de fonctionnement fermée, l'embrayage (5) étant commuté de façon automatisée, pour le déclenchement de phases de fonctionnement de déplacement sans entraînement, dans la position de fonctionnement ouverte et, en étant transféré de façon automatisée, pour le déclenchement de phases entraînées de fonctionnement de déplacement, dans la position de fonctionnement fermée,
**caractérisé en ce qu'**une distance par rapport au véhicule précédent est déterminée et que la position de fonctionnement de l'embrayage (7) est fonction de cette distance.

2. Procédé pour la mise en oeuvre d'un actionnement automatisé d'embrayage selon la revendication 1, **caractérisé en ce que** la distance est détectée en fonction du temps et qu'à partir de là est dérivée la vitesse de variation de la distance par rapport à un véhicule précédent.

3. Procédé pour la mise en oeuvre d'un actionnement automatisé d'embrayage selon la revendication 2, **caractérisé en ce que** l'embrayage (5) est ouvert d'une manière automatisée lorsque la vitesse de variation de la distance tombe au-dessous d'une valeur de seuil négative.

4. Procédé pour la mise en oeuvre d'un actionnement automatisé d'embrayage selon la revendication 1, **caractérisé en ce que** l'embrayage (5) est ouvert d'une manière automatisée lorsque la distance tombe au-dessous d'une valeur de seuil.

5. Procédé pour la mise en oeuvre d'un actionnement automatisé d'embrayage selon la revendication 2, **caractérisé en ce que** l'embrayage est fermé de façon automatisée lorsque la vitesse de variation de la distance est positive et dépasse une valeur de seuil.

6. Procédé pour la mise en oeuvre d'un actionnement automatisé d'embrayage selon la revendication 1, **caractérisé en ce qu'**un angle de la pédale d'accélérateur est détecté et que l'angle de la pédale d'accélérateur est détecté en fonction du temps et qu'à partir de là est dérivée la vitesse de variation de l'angle de la pédale d'accélérateur et que la position de fonctionnement de l'embrayage (5) est fonction de cette vitesse de variation.

7. Dispositif pour la mise en oeuvre d'un actionnement automatisé d'embrayage selon la revendication 1, **caractérisé en ce qu'**une accélération transversale est détectée et que la position de fonctionnement d'embrayage (5) dépend de l'accélération transversale.

8. Procédé pour la mise en oeuvre d'un actionnement automatisé d'embrayage selon la revendication 1, **caractérisé en ce qu'**au moins une valeur visuelle représentant les conditions d'observation est détectée et que l'embrayage (5) est fermé d'une manière automatisée lors du dépassement d'une valeur de seuil vers le bas et que les phases de fonctionnement de déplacement sans entraînement sont interrompues tant que la valeur de seuil reste dépassée vers le bas.

9. Procédé pour la mise en oeuvre d'un actionnement automatisé d'embrayage selon la revendication 1, **caractérisé en ce que** l'entraînement d'avance du véhicule automobile (1) par rapport à une chaussée (11) est réalisé à l'aide de roues motrices (10) et qu'une grandeur représentant le coefficient de frottement (µ) entre les roues motrices (10) et la chaussée (11) est déterminée et que l'embrayage (5) est fermé d'une manière automatisé lorsque cette grandeur tombe au-dessous d'une valeur de seuil et que les phases de fonctionnement en déplacement sans entraînement sont supprimées tant que la valeur de seuil est dépassée vers le bas.

10. Procédé pour la mise en oeuvre d'un actionnement automatisé d'embrayage selon la revendication 1, **caractérisé en ce que** dans le véhicule automobile (1) est présent un réseau routier virtuel, qui décrit des paramètres topographiques de la section de déplacement et que la position de fonctionnement de l'embrayage (5) dépend de ces paramètres.

11. Procédé pour la mise en oeuvre d'un actionnement automatisé d'embrayage selon la revendication 1, **caractérisé en ce que** dans le véhicule automobile (1) est présent un réseau routier virtuel, qui décrit des paramètres de la section de déplacement, qui règlent le trafic et que la position de fonctionnement de l'embrayage (5) dépend de ces grandeurs paramètres.

12. Procédé pour la mise en oeuvre d'un actionnement automatisé d'embrayage selon la revendication 1, **caractérisé en ce que** dans le véhicule automobile (1) est présent un réseau routier virtuel, qui décrit des paramètres de la section de déplacement, qui sont relatifs à des zones de danger, et que la position de fonctionnement de l'embrayage (5) dépend de ces paramètres.

13. Procédé pour la mise en oeuvre d'un actionnement automatisé d'embrayage selon la revendication 1, **caractérisé en ce qu'**une grandeur représentant l'actionnement du frein (24) est déterminée et que l'embrayage (5) est fermé de façon automatisée lorsque la grandeur est ramenée au-dessous d'une valeur de seuil et que le véhicule automobile (1) est situé dans la phase de fonctionnement de déplacement sans entraînement.

14. Procédé pour la mise en oeuvre d'un actionnement automatisé d'embrayage selon la revendication 1, **caractérisé en ce qu'**une grandeur représentant l'actionnement du frein (24) est déterminée et que cette grandeur est détectée dans le temps et que la vitesse de variation de cette grandeur est déterminée à partir de là et que la position de fonctionnement de l'embrayage (5) dépend de cette vitesse de variation.

15. Procédé pour la mise en oeuvre d'un actionnement automatisé d'embrayage selon la revendication 1, **caractérisé en ce que** la vitesse de déplacement est prédéterminée au moyen d'un angle de la pédale d'accélérateur (19), dont la déviation à l'intérieur d'un angle de tolérance pendant la phase de fonctionnement de déplacement sans entraînement ne conduit pas à la fermeture de l'embrayage (5), l'angle de tolérance possédant une valeur limite inférieure et une valeur limite supérieure, et selon lequel la valeur limite inférieure est associée à une réduction de la vitesse de rotation du moteur d'entraînement et qu'un dépassement de cette valeur limite inférieure vers le bas conduit non seulement à une fermeture automatisée de l'embrayage (5), mais également à une interruption d'un envoi de carburant du moteur d'entraînement (3).

16. Procédé pour la mise en oeuvre d'un actionnement automatisé d'embrayage selon la revendication 15, **caractérisé en ce que** les deux valeurs limites sous la forme de résistance (point de pression) peuvent être décelées par le conducteur du véhicule.

17. Procédé pour la mise en oeuvre d'un actionnement automatisé d'embrayage selon la revendication 6, **caractérisé en ce que** l'embrayage (5) est ouvert d'une manière automatisée lorsque la vitesse de variation de l'angle de la pédale d'accélérateur est négative et tombe au-dessous d'une valeur de seuil.

18. Procédé pour la mise en oeuvre d'un actionnement automatisé d'embrayage selon la revendication 6, **caractérisé en ce qu'**on détecte si le véhicule automobile (1) est situé dans une descente et que l'embrayage (5) est fermé d'une manière automatisée lorsque d'une part une descente est détectée et que d'autre part la vitesse de variation de l'angle de la pédale d'accélérateur est négatif et tombe au-dessous d'une valeur de seuil.

19. Procédé pour la mise en oeuvre d'un actionnement automatisé d'embrayage selon la revendication 6, **caractérisé en ce que** l'embrayage (5) est fermé de manière automatisée lorsque la vitesse de variation de l'angle de la pédale d'accélérateur est positive et dépasse une valeur de seuil.

20. Procédé pour la mise en oeuvre d'un actionnement automatisé d'embrayage selon la revendication 7, **caractérisé en ce que** l'embrayage (5) est fermé de façon automatisée, lorsqu'une valeur de seuil de l'accélération transversale est dépassée par valeur supérieure.

21. Procédé pour la mise en oeuvre d'un actionnement automatisé d'embrayage selon la revendication 14, **caractérisé en ce que** l'embrayage (5) est fermé de façon automatisée lorsque la vitesse de variation de la grandeur représentant l'actionnement du frein (24) est négative et tombe au-dessous d'une valeur de seuil.

22. Procédé pour la mise en oeuvre d'un actionnement automatisé d'embrayage selon la revendication 14, **caractérisé en ce que** l'embrayage (5) est ouvert de façon automatisée lorsque la vitesse de variation de la grandeur représentant l'actionnement du frein (24) est positive et dépasse une valeur de seuil.

23. Procédé pour la mise en oeuvre d'un actionnement automatisé d'embrayage selon l'une des revendications 3, 4, 5, 8, 9, 13, 17, 18, 19, 20, 21, 22,
**caractérisé en ce que** la valeur de seuil respective dépend d'une vitesse du véhicule automobile (1).

24. Procédé pour la mise en oeuvre d'un actionnement automatisé d'embrayage selon la revendication 3, 4, 5, 8, 9, 13, 17, 18, 19, 20, 21, 22, **caractérisé en ce que** la valeur de seuil respective dépend de la vitesse de rotation du moteur d'entraînement (3).

25. Procédé pour la mise en oeuvre d'un actionnement automatisé d'embrayage selon la revendication 3, 4, 5, 8, 9, 13, 17, 18, 19, 20, 21, 22, **caractérisé en ce que** la valeur de seuil respective dépend d'un rapport de démultiplication réglé dans la boîte de vitesses (8).

26. Procédé pour la mise en oeuvre d'un actionnement automatisé d'embrayage selon la revendication 3, 4, 5, 8, 9, 13, 17, 18, 19, 20, 21, 22, **caractérisé en ce qu'**une grandeur représentant le comportement de conduite du conducteur du véhicule est présente dans le véhicule automobile (1) et que la valeur de seuil respective dépend de cette grandeur.

27. Procédé pour la mise en oeuvre d'un actionnement automatisé d'embrayage selon la revendication 10, **caractérisé en ce que** le véhicule automobile (1) comporte un récepteur, qui reçoit les paramètres de la part d'un émetteur.

28. Procédé pour la mise en oeuvre d'un actionnement automatisé d'embrayage selon la revendication 11, **caractérisé en ce que** le véhicule automobile (1) comporte un récepteur, qui reçoit les paramètres de la part d'un émetteur.

29. Procédé pour la mise en oeuvre d'un actionnement automatisé d'embrayage selon la revendication 12, **caractérisé en ce que** le véhicule automobile (1) comporte un récepteur, qui reçoit les paramètres de la part d'un émetteur.

30. Procédé pour la mise en oeuvre d'un actionnement automatisé d'embrayage selon la revendication 10, **caractérisé en ce que** les paramètres sont présents sous forme mémorisée sur un support de données dans le véhicule automobile (1).

31. Procédé pour la mise en oeuvre d'un actionnement automatisé d'embrayage selon la revendication 11, **caractérisé en ce que** les paramètres sous forme mémorisée sont présents sur un support de données dans le véhicule automobile (1).

32. Procédé pour la mise en oeuvre d'un actionnement automatisé d'embrayage selon la revendication. 12, **caractérisé en ce que** les paramètres sous forme mémorisée sont présents sur un support de données dans le véhicule automobile (1).

33. Procédé pour la mise en oeuvre d'un actionnement automatisé d'embrayage selon la revendication 8, **caractérisé en ce que** la valeur visuelle représentant les conditions d'observation est fournie par un détecteur de pluie (18).

34. Procédé pour la mise en oeuvre d'un actionnement automatisé d'embrayage selon la revendication 8, **caractérisé en ce que** la valeur visuelle représentant les conditions d'observation dépend de l'état de fonctionnement d'une lampe anti-brouillard ou d'un projecteur anti-brouillard du véhicule automobile (1).

35. Procédé pour la mise en oeuvre d'un actionnement automatisé d'embrayage selon la revendication 9, **caractérisé en ce que** la grandeur, qui représente le coefficient de frottement (µ) entre les roues motrices (10) et la chaussée (11), est une différence de vitesse de rotation, qui s'établit entre les roues motrices (10) et les roues non motrices (26).

36. Procédé pour la mise en oeuvre d'un actionnement automatisé d'embrayage selon la revendication 9, **caractérisé en ce que** la grandeur, qui représente le coefficient de frottement (µ) entre les roues motrices (10) et la chaussée (11), est déterminée au moyen d'un capteur, qui mesure la réflexion de la lumière sur la chaussée (11).
